**Europäisches Patentamt**

**European Patent Office**

**Office européen des brevets**

(19)

(11) Numéro de publication: **0 243 247 B1**

(12) **FASCICULE DE BREVET EUROPEEN**

(45) Date de publication du fascicule du brevet:
**11.07.90**

(51) Int. Cl.⁵: **G09F 7/00,** G09F 7/18, F16B 5/06

(21) Numéro de dépôt: **87400867.5**

(22) Date de dépôt: **15.04.87**

(54) **Plaque à fixation par emboîtement élastique.**

(30) Priorité: **18.04.86 FR 8605637**

(43) Date de publication de la demande:
**28.10.87 Bulletin 87/44**

(45) Mention de la délivrance du brevet:
**11.07.90 Bulletin 90/28**

(84) Etats contractants désignés:
**AT BE CH DE ES GB GR IT LI LU NL SE**

(56) Documents cités:
**BE-A- 867 359**
**GB-A- 2 150 727**

(73) Titulaire: **Villard, Gérard, Les Communaux, F-44360 Saint Etienne de Montluc(FR)**

(72) Inventeur: **Villard, Gérard, Les Communaux, F-44360 Saint Etienne de Montluc(FR)**

(74) Mandataire: **Dawidowicz, Armand Cabinet Lemonnier-Dawidowicz, 4, Boulevard Saint Denis, F-75010 Paris(FR)**

ACTORUM AG

## Description

La présente invention concerne la fixation d'une plaque plane mince sur un support par emboîtement d'un profil en relief bordant ladite plaque sur au moins une partie de sa périphérie, sur un profil complémentaire en relief porté par un deuxième élément avec déformation élastique temporaire, au moment de l'emboîtement, d'au moins l'un des deux éléments, fixation dite par clipsage.

Pour qu'une fixation par clipsage soit réalisée sans jeu et surtout pour que les deux pièces assemblées ne soient pas susceptibles d'un déplacement réciproque par glissement selon la direction longitudinale des profils de clipsage assemblés, il faut qu'au moins l'un des éléments conserve, après clipsage, une déformation élastique créant une force de mise en appui l'un contre l'autre des profils emboîtes. En fait, l'élément interne, c'est-à-dire celui dont les profils de bordure en saillie par rapport à la surface dudit élément sont poussés vers le centre, est soumis à un couple de flexion tendant à créer une déformation convexe repoussant le centre de l'élément vers l'extérieur à l'opposé du côté sur lequel font saillie les profils de clipsage, tandis que l'autre élément est sujet à une déformation concave par rapport au côté opposé à celui sur lequel font saillie les profils de clipsage. Si l'on considère le canal formé par une plaque avec sur ses deux bords les profils de clipsage en relief, le canal interne tend à être refermé et celui externe emboîté par dessus à être ouvert. Si donc les éléments bordés par les profils de clipsage sont des plaques minces et partant présentent peu de résistance à la flexion, les plaques vont présenter, après clipsage, une déformation concave ou convexe de la surface extérieure, c'est-à-dire de la surface qui ne fait pas face à l'autre plaque. Bien évidemment cette déformation sera également d'autant plus sensible que l'arête d'enclenchement des profils de clipsage sera plus éloignée du plan de la plaque, c'est-à-dire que l'ensemble fixé par clipsage aura plus de volume apparent.

Cette déformation, même faible, nuit à l'aspect de surface de la plaque notamment sous un éclairage rasant.

A côté de cet inconvénient, la fixation dite par clipsage présente divers avantages qui résident notamment dans l'amovibilité, lorsque les profils de clipsage présentent un profil adéquat, et, en ce qui concerne l'aspect, dans l'absence complète de moyens de fixation apparents. Ces deux avantages sont particulièrement appréciés dans la signalisation susceptible d'une modification périodique telle que les tableaux nominatifs des occupants d'un immeuble, la signalisation directionnelle dans les parcs d'exposition, l'affichage des nom et qualité des occupants de bureaux administratifs, l'affichage publicitaire ou des prix dans les magasins ou dans des applications purement esthétiques mettant en oeuvre des panneaux de couleurs diverses modifiables à volonté.

Les plaques constituant la surface visible ou plaques de façade doivent, dans ces diverses applications, être légères et minces et sont donc, lorsqu'elles sont fixées sur leur support par clipsage de leurs bords repliés sur des profils de clipsage courant le long des bords d'une plaque mince formant l'élément complémentaire ou sur des pattes de clipsage n'occupant qu'une longueur réduite des plaques de façade, sujettes à la déformation analysée ci-dessus.

Le brevet belge 867 359 décrit un dispositif de montage et de fixation d'un corps, en particulier un matelas semi-rigide. Ce document a pour but de créer deux profils emboîtés qui forment pinces pour maintenir le matelas placé entre eux deux mais n'empêche pas le fléchissement par déformation concave de la surface frontale du profilé exterieur emboîté par clipsage sur le profilé intérieur.

La présente invention a pour but de remédier à ces inconvénients dans le clipsage des bords profilés en saillie vers l'arrière d'une plaque de façade sur des profils déformables élastiquement, le dispositif de clipsage étant caractérisé en ce que lesdits profils déformables élastiquement à l'extérieur desquels sont emboîtés les bords profilés de la plaque de façade présentent, par rapport à l'arête d'accrochage des bords profilés sur l'élément complémentaire, une largeur de partie libre, articulée élastiquement autour de cette arête, supérieure à la distance séparant, d'une part, la génératrice du bord profilé de la plaque mince coopérant avec l'arête d'accrochage et, d'autre part, la surface intérieure de la plaque de façade.

Avec cette disposition et après clipsage, l'extrémité de la partie libre articulée élastiquement autour de l'arête d'accrochage exerce sur la plaque de façade mince qui a été clipsée et au voisinage du bord clipsé de celle-ci, une réaction qui ne crée plus un couple de flexion dans le bord profilé aboutissant à l'arête d'accrochage mais qui met en tension la plaque mince en tension la plaque mince en sollicitant en appui élastique le bord profilé contre la surface arrière de l'arête d'accrochage, selon une direction perpendiculaire à la plaque mince.

Avec le dispositif conforme à l'invention et d'une manière étonnante la plaque de façade mince reste parfaitement plane après clipsage, il n'y a pas de jeu dans l'emboîtement et la force d'appui est néanmoins suffisamment intense pour empêcher par le frottement tout glissement de la plaque de façade sur l'élément complémentaire selon la direction de l'arête d'accrochage.

Selon une autre caractéristique et dans le cas de bords profilés de clipsage présentant un grand écartement, la partie centrale de la plaque de façade et/ou de l'élément complémentaire peut être rendue plus rigide que les parties voisines des profilés de clipsage par un accroissement de l'épaisseur, par adjonction d'éléments rigides tels que plaquettes ou entretoises fixés sur cette partie centrale, etc.

Selon une autre caractéristique et pour solidariser de façon inamovible la plaque de façade avec l'élément complémentaire, notamment dans le cas d'un clipsage d'une plaque de façade avec bords profilés de clipsage parallèles formant un canal, une cale s'opposant à la déformation élastique vers l'intérieur des parties libres des profilés de clipsage de l'élément complémentaire est, après clipsage, introduite entre au moins les deux dites parties libres opposées.

Lorsque l'élément complémentaire a lui-même une section en canal pour former avec la plaque de façade un élément tubulaire plat, deux cales sont engagées dans les extrémités de la section déformée de l'élément complémentaire ou un raidisseur rigide ou élastiquement compressible occupant une plus ou moins grande longueur de l'élément est introduit dans le canal de section déformée de l'élément complémentaire.

Ces cales comportent par exemple un noyau en coin s'engageant à l'intérieur du canal de l'élément complémentaire et, sur la face arrière du noyau, un bord périphérique venant coopérer avec le bord de la plaque de façade pour former cache. Elles peuvent également être constituées par une plaquette portant des lames élastiques engageables dans les extrémités de la plaque de façade et de l'élément complémentaire assemblés, les lames élastiques se clipsant sur au moins un des éléments assemblés.

Les deux cales aux extrémités opposées peuvent être réunies par un tirant pour éviter l'arrachement manuel des cales.

Lorsque l'ensemble constitué par l'élément complémentaire et la plaque de façade doit être monté sur un support ,la solidarisation avec le support peut être effectuée par l'intermédiaire de l'élément complémentaire, notamment lorsque celui-ci n'est pas visible. L'élément complémentaire peut être vissé, collé ou fixé de toute autre façon sur le support. Le support peut être constitué par une paroi, des rails verticaux et/ou horizontaux et/ou obliques, éventuellement des rails disposés selon deux orientations et articulés à leurs points de recoupement ou disposés selon une seule direction et solidarisés de façon pivotante avec les éléments complémentaires. L'élément complémentaire peut également être fixé sur des poteaux ou des barres horizontales par des colliers ou des pinces. Deux éléments complémentaires peuvent être fixés dos à dos sur un même support.

Lorsque la face arrière de l'élément complémentaire est visible, la plaque constituant cet élément complémentaire devenant plaque de façade, par exemple pour une signalisation à lecture double face perpendiculaire à la paroi support, la solidarisation avec le support peut se faire par l'intermédiaire de l'une des cales d'extrémité lorsqu'il s'agit de la fixation perpendiculairement à une paroi ou par les deux cales d'extrémité lorsqu'il s'agit de la fixation sur un socle. Le socle peut également être constitué par des éléments longilignes articulés chacun autour d'un vertical sur l'un des bords profilés de la plaque de façade, lesdits éléments pouvant être placés dans le plan des éléments assemblés pour le rangement ou sensiblement perpendiculairement à celui-ci pour maintenir plaque de façade verticale.

Il est à noter que, dans le cas de la fixation sur une paroi murale, la plaque de façade proprement dite qui est normalement personnalisée et la plaque de façade formée par l'élément complémentaire, notamment lorsqu'elle est également parsonnalisée et doit de ce fait être déplacée avec la plaque de façade, peuvent être séparées comme un tout de la cale solidaire de la paroi pour être ensuite fixées sur une cale située en un autre endroit.

Les plaques de façade conformes à l'invention peuvent être peintes, gravées, perforées et réalisées en tous matériaux tels qu'alliage léger, matière plastique translucide, transparente ou opaque, etc. En raison de l'absence de couple de sollicitation à la flexion après clipsage, l'élément tubulaire plat, réalisé par la plaque de façade et l'élément complémentaire, peut avoir une épaisseur suffisante pour y loger un tube lumineux avec une plaque de façade translucide ou transparente. Un joint d'étanchéité plastique peut être emprisonné au moment du clipsage entre les bords profilés des deux éléments.

Dans les applications usuelles la plaque de façade a une forme rectangulaire allongée avec des profiles d'accrochage parallèles sur les deux côtés et l'élément complémentaire a une forme en canal de même longueur ou n'occupant qu'une fraction de la longueur de la plaque de façade. Les profiles de clipsage peuvent toutefois être disposés selon les côtés d'un triangle, d'un rectangle ou plus généralement selon toute forme géométrique.

L'invention sera décrite plus en détail ci-après avec référence au dessin ci-annexé dans lequel:

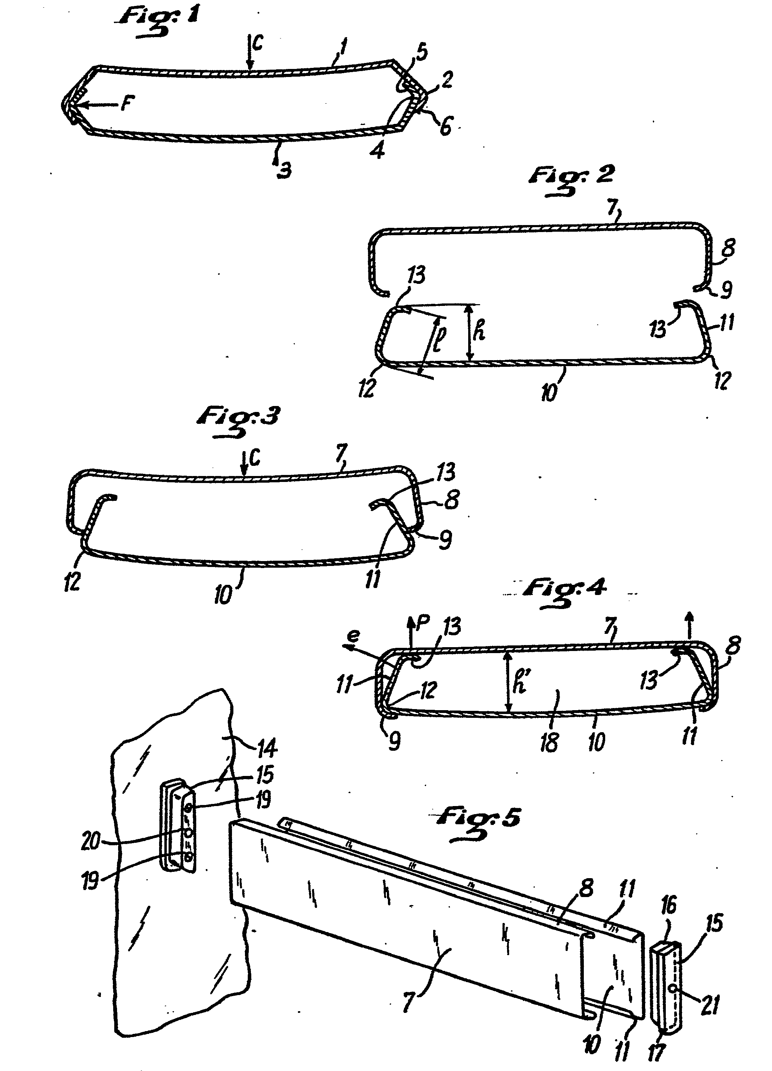

La figure 1 est un schéma pour expliquer les contraintes après clipsage constatées dans un système de clipsage du type classique; la figure 2 est une vue en coupe transversale d'éléments assemblables par clipsage conformément à l'invention; la figure 3 est une vue en coupe des mêmes éléments déformés élastiquement au cours de l'emboîtement; la figure 4 une vue en coupe transversale après clipsage des éléments conformes à l'invention et la figure 5 une vue à l'état explosé d'un panneau signalétique fixé sur une cloison.

Dans le mode de réalisation de l'art antérieur représenté à la figure 1, la plaque de façade qui emboîte par l'extérieur l'élément complémentaire est désignée par la référence 1. Les bords de la lame mince, par exemple en alliage léger, qui constitue la plaque de façade sont repliés sur la face arrière de manière à constituer un dièdre d'accrochage 2. L'élément complémentaire 3 est également constitué par une lame mince dont les bords sont repliés pour constituer une arête d'accrochage 4. Lesdits bords sont prolongés au-delà de l'arête en 5 en étant repliés à nouveau vers l'intérieur de manière qu'à l'état libre ou lorsque le dièdre 2 d'un des bords est engagé sur l'arête 4 correspondante, le bord 6 du dièdre de l'autre côté vienne en appui sur le prolongement 5. Lorsque l'on pousse à force à partir de l'une ou l'autre de ces positions la plaque de façade 1 vers l'élément complémentaire 3, le dièdre 2 s'ouvre élastiquement (dans le sens inverse des aiguilles d'une montre sur la partie de droite de la figure 1) alors que celui formant l'arête 4 est déplacé vers l'intérieur sous la poussée du bord 6 s'exerçant sur le prolongement 5. Simultanément les surfaces des lames minces se trouvent cintrées, la lame 1 donnant une surface concave vers l'extérieur et la lame 3 une surface convexe. Lorsque le bord 6 a dépassé l'arête 4 et porte sur la base du dièdre, il se produit un encliquetage dit clipsage, les déformations élastiques des plaques 1, 3 et des dièdres 2, 4 tendant à disparaître.

Toutefois, pour éviter un jeu transversal de la plaque de façade 1 par rapport à l'élément complémentaire 3 et s'opposer à un glissement relatif selon la direction perpendiculaire au plan de figure, il faut qu'il subsiste dans l'ensemble une certaine déformation élastique qui force selon la flèche F l'arête 4 contre le fond du dièdre 2. Cette force F résiduelle maintient une certaine concavité C de la plaque de façade 1. L'invention a pour but d'éviter cette concavité qui peut correspondre à une flèche importante dans le cas de lames 1 minces et peu rigides.

Conformément à l'invention et selon un mode de réalisation la plaque de façade 7 a ses bords repliés en 8, lesdits bords se terminant par une arête d'accrochage 9. L'élément complémentaire 10 a ses bords repliés en 11 pour former une surface rentrant vers l'antérieur et ayant le même rôle que le prolongement 5 de l'art antérieur pour, lors de l'emboîtement à force, repousser le bord 9 vers l'extérieur comme illustré à la figure 3. Pendant cette opération, qui peut s'effectuer également en engageant le bord 9 d'un des côtés sous l'arête 12 correspondante entre l'âme 10 et la partie rabattue 11 et en faisant basculer la plaque de façade autour de cette arête, les deux éléments se déforment élastiquement d'une manière identique à l'art antérieur, la lame 7 prenant une concavité C.

Après emboîtement, c'est-à-dire lorsque le bord 9 est passé derrière l'arête 12, les éléments tendent à reprendre leur forme d'origine. Toutefois et conformément à l'invention, la largeur $\ell$ de la bande 11 entre l'arête d'accrochage 12 et le bord libre 13 de la bande est telle que la hauteur h à l'état libre du bord 13 par rapport à la surface interne de la lame 10 formant l'élément complémentaire est légèrement supérieure à la distance h' entre les surfaces en regard des lames 10 et 7 à l'état clipsé, c'est-à-dire lorsque le bord 9 est engagé sous l'arête 12. Il en résulte qu'après clipsage les bords repliés 11 ne peuvent reprendre leur position d'origine et restent soumis à un couple élastique résiduel $\underline{e}$ qui se traduit par une poussée P exercée sur la lame 13, poussée qui se traduit par une mise en appui du bord 9 contre l'arête 12.

Il faut remarquer que, dans l'invention, la forme exacte des bords rabattus 8 de la plaque 7 et la position de l'arête d'accrochage 12 ne sont pas limitatifs. Le bord 8 pourrait, au lieu d'être plan et perpendiculaire à la lame 7, avoir une section semi-circulaire. On pourrait de même conserver l'emboîtement angulaire de la figure 1, le prolongement 5 étant élargi pour qu'à l'état emboîté ce prolongement 5 reste déformé en étant écarté de la surface intérieure du dièdre 2 avec son bord appuyant élastiquement sur la surface intérieure de la lame 1.

Dans la figure 5 on a désigné par 10 la lame formant l'élément complémentaire et par 7 la plaque de façade. La plaque 10 formant l'élément complémentaire n'est que faiblement convexe après le clipsage de sorte qu'elle peut, comme la plaque de façade 7, porter des informations signalétiques. Dans ce cas l'ensemble clipsé peut être fixé perpendiculairement sur une paroi 14. Pour ce faire on utilise des cales 15 qui assurent le blocage en position des bords repliés 11. Pour assurer ce blocage les cales comportent un noyau 16 sensiblement en tronc de pyramide et une plaquette de base 17. Alors que le noyau 16 s'engage à force dans l'espace interne 18 (Fig. 4), la plaquette de base 17 vient recouvrir le bord extrême de la plaque de façade 7 et de la lame 10. Pour la fixation sur la paroi 14 on peut fixer sur celle-ci avec des vis 19 ou autrement une cale 15 sur laquelle est emboîte à force l'ensemble clipsé (7-10). Il est également possible de prévoir un tirant tel qu'une tige filetée vissée en 20 dans la cale 15 et/ou dans la paroi 14 et qui traverse la cale 15 opposée par un trou 21, son extrémité pouvant recevoir un écrou.

Les modes de réalisation ci-dessus décrits à titre d'exemples illustratifs peuvent recevoir de nombreuses modifications sans sortir du cadre de la présente invention. C'est ainsi notamment que les cales 15 pourraient être constituées par une plaquette présentant des pattes élastiques en saillie destinées à venir s'engager dans l'élément tubulaire formé par la plaque de façade et l'élément complémentaire avec clipsage élastique desdites pattes sur l'un des éléments.

**Revendications**

1. Une plaque à fixation par clipsage par emboîtement des profils (8-9) bordant ladite plaque (7) sur au moins une partie de sa périphérie, sur des profils complémentaires en relief (11-12) porté par un deuxième élément (10) avec déformation élastique temporaire, au moment de l'emboîtement, d'au moins l'un des deux éléments,
caractérisée en ce que les profils (11) déformables élastiquement à l'extérieur desquels sont emboîtés les bords profilés (8-9) de la plaque de façade (7) présentent, par rapport à l'arête d'accrochage (12) des bords profilés (9) sur l'élément complémentaire, une largeur ($\ell$) de partie libre, articulée élastiquement autour de cette arête (12), supérieure à la distance (h') séparant, d'une part, la génératrice (9) du bord profilé de la plaque mince (7) coopérant avec l'arête d'accrochage (12) et, d'autre part, la surface intérieure de la plaque de façade (7).

2. Une plaque à fixation par clipsage selon la revendication 1,
caractérisée en ce qu'une cale (15) s'opposant à la déformation élastique vers l'intérieur des parties libres (11) des profilés de clipsage de l'élément complémentaire (10) est, après clipsage, introduite entre au moins les deux dites parties libres (11) opposées.

3. Une plaque à fixation par clipsage selon la revendication 2,
caractérisée en ce qu'une cale (15) comporte un noyau en coin (16) s'engageant à l'intérieur du canal de l'élément complémentaire (10) et, sur la face arrière du noyau, un bord périphérique (17) venant coopérer avec le bord de la plaque de façade (7-8) pour former cache.

4. Une plaque à fixation par clipsage selon la revendication 1,
caractérisée en ce qu'une cale (16) est constituée par une plaquette de recouvrement des extrémités de la plaque de façade (7) et de l'élément complémentaire (10) et deux pattes élastiques s'engageant dans le profil tubulaire constitué par ces deux éléments pour venir se solidariser par clipsage avec au moins l'un d'entre eux.

5. Une plaque à fixation par clipsage selon l'une quelconque des revendications 2 à 4,
caractérisée en ce que les deux cales (15) aux extrémités opposées sont réunies par un tirant.

6. Une plaque à fixation par clipsage selon l'une quelconque des revendications 1 à 5,
caractérisée en ce que la solidarisation avec le support est effectuée par l'intermédiaire de l'élément complémentaire (10).

7. Une plaque à fixation par clipsage selon la revendication 6,
caractérisée en ce que le support est constitué par une surface plane sur laquelle l'élément complémentaire est vissé, collé ou fixé de toute autre façon, par exemple par attraction magnétique.

8. Une plaque à fixation par clipsage selon la revendication 6,
caractérisée en ce que le support est constitué par des rails verticaux et/ou horizontaux et/ou obliques, éventuellement des rails disposés selon deux orientations et articulés à leurs points de recoupement ou disposés selon une seule direction et solidarisés de façon pivotante avec les éléments complémentaires.

9. Une plaque à fixation par clipsage selon la revendication 6,
caractérisée en ce que deux éléments complémentaires (10) sont fixés dos à dos sur le même support.

10. Une plaque à fixation par clipsage selon l'une quelconque des revendications 2 à 5,
caractérisée en ce que la solidarisation avec le support (14) est effectuée par l'intermédiaire d'au moins l'une des cales d'extrémité (15).

11. Une plaque à fixation par clipsage selon l'une quelconque des revendications 1 à 10,
caractérisée en ce que, dans le cas de bords profilés de clipsage présentant un grand écartement, la partie centrale de la plaque de façade et/ou de l'élément complémentaire est rendue plus rigide que les parties voisines des profilés de clipsage par un accroissement de l'épaisseur, ou par adjonction d'éléments rigides tels que plaquettes ou entretoises fixés sur cette partie centrale.

12. Une plaque à fixation par clipsage selon l'une quelconque des revendications 1 à 11,
caractérisée en ce qu'un raidisseur rigide ou élastiquement compressible occupant une plus ou moins grande longueur de l'élément est introduit dans le canal de section déformée de l'élément complémentaire.

## Claims

1. A plate attached by a clipping engagement of the sections (8–9) bordering said plate (7) along at least a part of its periphery, on complementary relief sections (11–12) borne by a second member (10) with temporary elastic deformation, at the moment of the clipping, of at least one of the two elements, characterized in that the elastically deformable sections (11) outside which are engaged the sectional edges (8–9) of the front plate (7) have, in relation to the hitching ridge (12) of the sectional edges (9) of the complementary member, a width (l) of its free part, elastically articulated to this ridge (10), which is bigger than the distance (h') separating on the one hand the generator (9) of the sectional edge of the thin plate (7) cooperating with the hitching ridge (12), and on the other hand the inner surface of the front plate (7).

2. A plate attached by clipping according to claim 1, characterized in that a wedge (15) opposing the elastic deformation in the inward direction of the free parts (11) of the clipping sections of the complementary member (10) is, after clipping, introduced between at least the two said opposite free parts (11).

3. A plate attached by clipping according to claim 2, characterized in that a wedge (15) includes a corner core (16) projecting inside the channel of the complementary member (10) and, on the back face of the core, a peripheral edge (17) which cooperates with the edge of the front plate (7–8) to form a cover.

4. A plate attached by clipping according to claim 1, characterized in that a wedge (16) is constituted by a small plate covering the extremities of the front plate (7) and of the complementary member (10) and by two elastic lugs which are engaged in the tubular section constituted by these two elements in order to be interengaged by clipping with at least one of these two members.

5. A plate attached by clipping according to any one of claims 2 to 4, characterized in that the two wedges (15) at the opposite ends are interconnected by a tie rod.

6. A plate attached by clipping according to any one of claims 1 to 5, characterized in that the interengagement with the support is effected thanks to the complementary member (10).

7. A plate attached by clipping according to claim 6, characterized in that the support is constituted by a flat surface on which the complementary member is screwed, glued or fixed in any other way, for example by magnetic attraction.

8. A plate attached by clipping according to claim 6, characterized in that the support is constituted by vertical and/or horizontal and/or oblique railings, eventually railings disposed along two orientations and articulated at their meeting points, or disposed along a single direction and made interdependent in a revolving way with the complementary members.

9. A plate attached by clipping according to claim 6, characterized in that the two complementary members (10) are fixed back to back on the same support.

10. A plate attached by clipping according to any one of claims 2 to 5, characterized in that the interengagement with the support (14) is effected via at least one of the end wedges (15).

11. A plate attached by clipping according to any one of claims 1 to 10, characterized in that in the eventuality of clipping sectional edges widely spaced apart, the central part of the front plate and/or the complementary member is made more rigid than the parts which are near the clipping sections by an increase in the thickness, or by adding rigid elements such as small plates or braces fixed on this central part.

12. A plate attached by clipping according to any one of claims 1 to 11, characterized in that a rigid or elastically compressible stiffener element occupying a more or less large length of the element is introduced in the channel of deformed section of the complementary member.

## Patentansprüche

1. Ein Schild, welches durch Ineinandergreifen der das genannte Schild (7) wenigstens an einem Teil des Kreisumfangs einfassenden Profile (8–9) mit Ergänzungsprofilen (11–12) befestigt wird, aufliegend auf einem zweiten Element (10) unter zeitweiliger elastischer Verformung wenigstens eines der beiden Elemente zum Zeitpunkt des Ineinandergreifens, dadurch gekennzeichnet, daß die elastisch verformbaren Profile (11), an deren Außenseite die Profilränder (8–9) des vorderen Schilds (7) eingreifen, welches im Verhältnis zur Eingriffskante (12) der Profilränder (9) am dazu passenden Element eine Breite (l) des freien Teils, der auf elastische Weise gelenkig an dieser Kante (12) angebracht ist, aufweist, die größer ist als der Abstand (h'), der einerseits die Erzeugende (9) des Profilrandes des dünnen Schilds (7), die mit der Eingriffskante (12) zusammenwirkt, und andererseits die Innenfläche des vorderen Schilds (7) voneinander trennt.

2. Ein durch Ineinandergreifen befestigbares Schild nach Anspruch 1, dadurch gekennzeichnet, daß eine Unterlage (15), die der elastischen Verformung nach innen der freien Teile (11) der Eingriffsprofile des Ergänzungselements (10) entgegenwirkt, nach dem Ineinandergreifen wenigstens zwischen die beiden genannten, gegenüberliegenden freien Teile (11) eingeführt wird.

3. Ein durch Ineinandergreifen befestigbares Schild nach Anspruch 2, dadurch gekennzeichnet, daß eine Unterlage (15) einen keilförmigen Kern (16) aufweist, der in das Innere des Kanals des Ergänzungselements (10) eingreift, und an der Rückseite des Kerns einen Umfangsrand (17), der mit dem Rand des vorderen Schilds (7–8) zusammenwirkt und dabei eine Abdeckung bildet.

4. Ein durch Ineinandergreifen befestigbares Schild nach Anspruch 1, dadurch gekennzeichnet, daß eine Unterlage (16) aus einer Platte zur Abdeckung der Enden des vorderen Schilds (7) und des Ergänzungselements (11) besteht und zwei elastische Klammern in das durch diese beiden Elemente gebildete Rohrprofil eingreifen, um durch Eingriff mit wenigstens einem dieser Elemente fest damit verbunden zu werden.

5. Ein durch Ineinandergreifen befestigbares Schild nach einem der Ansprüche 2 bis 4, dadurch gekennzeichnet, daß die beiden Unterlagen (15) an den gegenüberliegenden Enden durch ein Zugelement miteinander verbunden sind.

6. Ein durch Ineinandergreifen befestigbares Schild nach einem der Ansprüche 1 bis 5, dadurch gekennzeichnet, daß die feste Verbindung mit der Stütze durch das Ergänzungselement (10) bewirkt wird.

7. Ein durch Ineinandergreifen befestigbares Schild nach Anspruch 6, dadurch gekennzeichnet, daß die Stütze aus einer ebenen Fläche besteht, mit der das Ergänzungselement verschraubt, verklebt oder auf andere Weise verbunden ist, z.B. durch magnetische Anziehung.

8. Ein durch Ineinandergreifen befestigbares Schild nach Anspruch 6, dadurch gekennzeichnet, daß die Stütze aus vertikalen und/oder horizontalen und/oder schrägen Schienen besteht, eventuell aus Schienen, die in zwei Richtungen angeordnet und an den Schnittstellen gelenkig befestigt oder nur in einer Richtung angeordnet und drehbar fest mit den Ergänzungselementen verbunden sind.

9. Ein durch Ineinandergreifen befestigbares Schild nach Anspruch 6, dadurch gekennzeichnet, daß die beiden Ergänzungselemente (10) Rücken an Rücken an der gleichen Stütze befestigt sind.

10. Ein durch Ineinandergreifen befestigbares Schild nach einem der Ansprüche 2 bis 5, dadurch gekennzeichnet, daß die feste Verbindung mit der Stütze (14) mit Hilfe wenigstens einer der Abschlußunterlagen (15) bewirkt wird.

11. Ein durch Ineinandergreifen befestigbares Schild nach einem der Ansprüche 1 bis 10, dadurch gekennzeichnet, daß im Falle von Profileingriffsrändern mit großem Abstand der mittlere Teil des vorderen Schilds und/oder des Ergänzungselements starrer ausgeführt ist als die angrenzenden Teile der Eingriffsprofile, entweder durch größere Dicke oder durch Hinzufügung von starren Elementen, wie z.B. Platten oder Zwischenstücken, die an diesem Mittelteil befestigt sind.

12. Ein durch Ineinandergreifen befestigbares Schild nach einem der Ansprüche 1 bis 11, dadurch gekennzeichnet, daß in den Kanal mit verformtem Querschnitt des Ergänzungselements eine starre oder elastisch zusammendrückbare Verstärkung eingebaut ist, die eine mehr oder weniger große Länge des Elements abdeckt.

Fig.1

Fig.2

Fig.3

Fig.4

Fig.5